# EUROPEAN PATENT SPECIFICATION

(11) **EP 2 390 739 B1**
(45) Date of publication and mention of the grant of the patent: **17.08.2016**
(21) Application number: 11152277.7
(22) Date of filing: 26.01.2011
(51) Int. Cl.: G05B 19/418

(54) **A method and apparatus for providing industrial plant information**
Verfahren und Vorrichtung zur Bereitstellung von Informationen zu einer Industrieanlage
Procédé et appareil pour fournir des informations d'installation industrielle

(30) Priority: 27.05.2010 US 788812
(43) Date of publication of application: 30.11.2011
(73) Proprietor: Yokogawa Electric Corporation, Musashino-shi Tokyo 180-8750 (JP)
(72) Inventor: Shi, Shuai, 469270 Singapore (SG)
(74) Representative: Henkel, Breuer & Partner

(56) References cited:
- EP-A2- 1 501 029
- WO-A1-99/05684
- US-A1- 2002 163 427

## Description

### Field of the Invention

The invention relates to a method and apparatus for providing industrial plant information and particularly, though not exclusively, relates to providing plant information between distributed control system operators and maintenance teams of an industrial plant.

### Background

Distributed Control Systems (DCS) are typically used to monitor and control operations in industrial plants. In a DCS, plant operations are usually presented to operators of the DCS in the form of function block diagrams describing a particular plant function between input variables and output variables. A function block may include one or more physical plant assets or devices such as pieces of equipment or instruments that are involved in carrying out the plant function controlled by the function block.

Maintenance of the physical devices in the plant is carried out by maintenance personnel, typically with the aid of an asset management system (AMS) to monitor the condition of plant assets remotely. The maintenance personnel are often organized as teams comprising a maintenance manager and engineers. Besides performing routine maintenance work, the maintenance teams are also called into action by operators of the DCS when necessary.

When a DCS operator finds any abnormalities in a function block of the DCS, the DCS operator typically notifies the maintenance team of the abnormality via face-to-face meetings, sms-texts, walkie-talkie, email, instant messaging systems, and other common conventional communication methods, together with a request to the maintenance team to check on specific devices in the plant that the DCS operator has identified as being involved in the abnormal function block.

Upon being notified by the DCS operator, the manager of the maintenance team normally assigns handling of the request to appropriate maintenance engineers based on their defined areas of responsibility depending on the location and critical level of the problem, among other factors. The maintenance engineers then work on the request, checking on the specific devices physically as well as with use of the AMS, and rectifying problems while periodically reporting their progress to the maintenance manager.

Once the maintenance work is thought to have been completed, the maintenance manager will notify the DCS operator of the completion, again via one or more of the conventional communication methods as described above, together with a request to the DCS operator to verify the plant function presented in the affected function block. If the operator confirms that there are no longer abnormalities showing in the function block, normal plant operations will be resumed, otherwise, the task is returned to the maintenance team for further work.

From abnormality detection in a DCS function block to resumption of normal operation of the plant as described above, various issues may arise that affect plant efficiency and safety. For example, because the DCS function blocks do not typically show the specific physical devices involved in each function block, identifying the problematic device or group of devices can be a difficult one for the DCS operator. A new operator taking over control of the same function block during a change of shift may also unsafely perform an action on one or more function blocks while being unaware that maintenance is currently taking place for a device that is involved in operations controlled by the one or more function blocks. Other engineers may also unsafely perform actions on other devices in a work unit that encompasses devices under maintenance. In addition, numerous instances of timely and accurate communication between DCS operators and maintenance teams and also within each maintenance team are required in order to restore plant operation after detection of a function block abnormality or after completion of a maintenance task.

US 2002/163427 A1 deals with integrated device alerts in a process control system. An events management system coordinates the exchange of device alert or alarm information between an asset management system and one or more business systems within a process control system or plant. The events management system receives device alerts from the asset management system and uses a rules-engine and one or more state machines to send notifications containing device alert information to one or more of the business systems.

WO 99/05684 deals with a computerized maintenance management system for the process control environment which integrates a CMMS system with a process control system.

### Summary of the Invention

In order to overcome the disadvantages of the prior art, there is provided a method of providing industrial plant information of an industrial plant as set out in independent claim 1 and an apparatus for providing industrial plant information of an industrial plant as set out in independent claim 9. Advantageous developments are defined in the dependent claims.

### Brief Description of the Drawings

In order that the invention may be fully understood and readily put into practical effect there shall now be described by way of non-limitative example only exemplary embodiments of the present invention, the description being with reference to the accompanying illustrative drawings.

In the drawings:
- FIG. 1: is an architecture diagram of an exemplary embodiment of an apparatus for providing plant information between a DCS and an AMS;
- FIG. 2: is a schematic illustration of an example of setting an operation mark using the apparatus of FIG. 1;
- FIG. 3: is a schematic illustration of an example of setting a maintenance mark using the apparatus of FIG. 1;
- FIG. 4: is a schematic illustration of another example of setting a maintenance mark using the apparatus of FIG. 1;
- FIG. 5: is a schematic illustration of a further example of setting a maintenance mark using the apparatus of FIG. 1;
- FIG. 6: is a schematic illustration of yet another example of setting a maintenance mark using the apparatus of FIG. 1;
- FIG. 7: is a schematic illustration of an example of removing an operation mark using the apparatus of FIG. 1;
- FIG. 8: is a flowchart of an exemplary use of the apparatus of FIG. 1
- FIG. 9: is an architecture diagram of a synchronization module of the apparatus of FIG. 1; and
- FIG. 10: is a flowchart of an exemplary embodiment of a method for providing plant information between a DCS and an AMS.

### Detailed Description of the Exemplary Embodiments

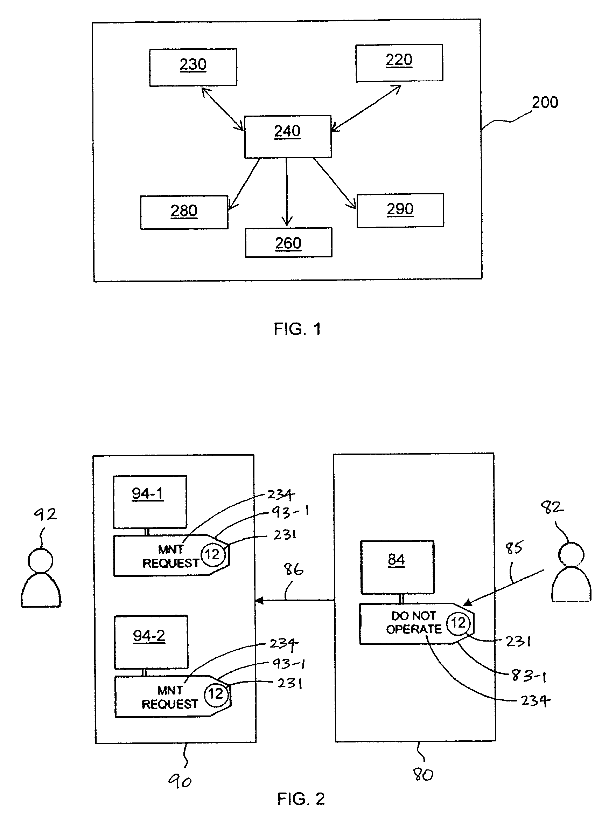

With reference to FIGS. 1 to 10, described below are an exemplary method 20 and apparatus 200 for providing information of an industrial plant that is controlled by a DCS 80 and wherein devices in the plant are monitored with the aid of an AMS 90. Throughout this specification, the word "a" is not limited to mean "only one" and may mean "one or more".

In the exemplary method 20 and apparatus 200, a plurality of marks are used to automatically provide appropriate information of the plant to one or more operators 82 of the DCS 80 and/or to one or more users 92 of the AMS 90, without having to rely on conventional communication channels such as face-to-face meetings, sms-texts, walkietalkie, email and instant messaging systems that are time-consuming and may be inadvertently missed or misinterpreted. An AMS user 92 may be a manager or an engineer of a maintenance team in charge of devices 94 monitored with the AMS 90.

In the apparatus 200, a display module 220 is provided to enable manipulation of marks in the DCS 80 and the AMS 90 and to display marks in the DCS 80 and the AMS 90 via user interfaces such as screens and monitors. The display of marks by the display module 220 is based on attributes of the marks, as will be described further below. Manipulation of a mark includes setting, modifying and removing the mark. Each mark that is manipulated by an operator 82 in the DCS 80 will be referred to as an operation mark 83. Each mark that is manipulated by a user 92 in the AMS 90 will be referred to as a maintenance mark 93. The display module 220 is preferably embedded in both the DCS 80 and the AMS 90 so that marks may be manipulated and displayed in both systems 80, 90.

A mark definition module 230 is provided for defining attributes of the plurality of marks. Attributes of the marks are preferably defined by DCS operators 82, AMS users 92 and other persons with an intimate knowledge of the operational requirements of the industrial plant, based on specific project requirements.

The attributes of each mark include an indexing value 231. The indexing value 231 is preferably a unique identification number of each operation mark 83 among a plurality of operation marks 83, and of each maintenance mark 93 among a plurality of maintenance marks 93. An operation mark 83 and a maintenance mark 93 that are linked to each other preferably have a same indexing value 231 for clarity in showing their relationship.

The attributes of each mark also include a synchronization setting. The synchronization setting defines whether an operation mark 83 is linked to any maintenance mark 93, whether a maintenance mark 93 is linked to any operation mark 83, and if linked, the linking relationship. Linking an operation mark 83 to a maintenance mark 93 is to allow appropriate information to be provided to AMS users 92 via the maintenance mark 93 when the linked operation mark 83 is manipulated by a DCS operator 82, and similarly, for appropriate information to be provided to DCS operators 82 via the operation mark 83 when the linked maintenance mark 93 is manipulated by an AMS user 92. The synchronization setting may also indicate that a mark is not linked to any other mark. For example, certain marks may be used only within the DCS 80 or only within the AMS 90 as an internal management mark, to communicate information among only DCS operators 83 or among only AMS users 93.

Appropriate information may be provided by a mark to a DCS operator 82 or an AMS user 92, as the case may be, by displaying the mark in a color that has been pre-defined with a meaning. For example, different colors may be used to categorize marks of different levels of importance. To that end, the attributes of each mark may include a color code. Alternatively or in addition, a descriptive text label 234 may be shown together with the mark, in which case the attribute of each mark may include the label 234. Preferably, mark labels 234 are viewable by all DCS operators 82 and AMS users 92.

Attributes of a mark may include a permissions setting. Within the permission settings attribute, it may be defined that only an authorized person or group of persons may manipulate marks for a specific device 94 in the AMS 90 or for a specific function block 84 in the DCS 80. It may also be defined that only authorized persons or groups of persons may manipulate a particular mark, based on user 93 or operator 83 authentication levels. For example, an authorized engineer may set a mark on the AMS 90 that is not to be removed by unauthorized engineers. Accordingly, the apparatus 200 may comprise a permission module 260 configured for allowing only selected DCS operators 82 and AMS users 92 to manipulate selected marks.

A notification setting may also be included among the attributes of a mark for defining whether any alerts should be sent by common communication methods to specified DCS operators 82 or AMS users 92 when the mark is manipulated, displayed or updated. Accordingly, the apparatus 200 may comprise a notification module 280 configured for alerting one or more DCS operators 82 or AMS users 92 when a particular mark has been manipulated, displayed or updated. The notification module 280 may generate operation guidance messages, emails or sms-texts that are sent on to the relevant person or persons involved based on user-defined requirements.

Another mark attribute may be a remarks feld for capturing a detailed explanation of the mark and its relationship with linked marks, if any. The remarks field serves as a reference section for mark definition.

The apparatus 200 may also comprise a third party module 290 configured for defining and triggering corresponding action such as an event or function in a third party system or software upon a particular manipulation of a particular mark. This would be based on predefined mark attributes that may accordingly include a third party action setting.

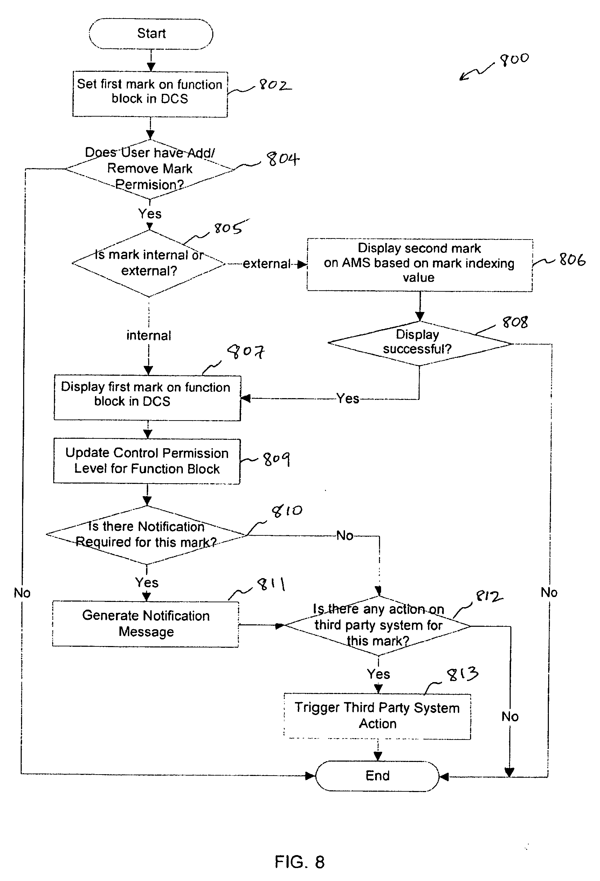

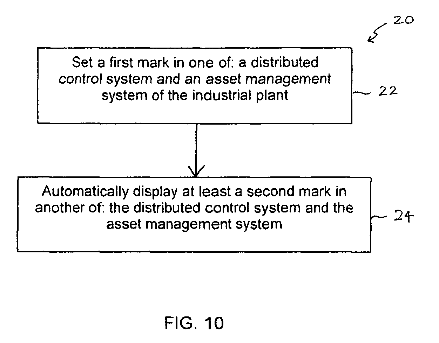

In use, a first mark is set using the display module 220 in either the DCS or the AMS, 22, as shown in FIG. 10. For example, upon detection of an abnormality in the function block 84, as indicated by arrow 85 in FIG. 2, an operator 82 may set an operation mark 83-1 on a function block 84 in the DCS 80, 802, as also depicted in the flowchart of FIG. 8. The operator 82 may also halt operation of the function block 84 until the abnormality has been resolved.

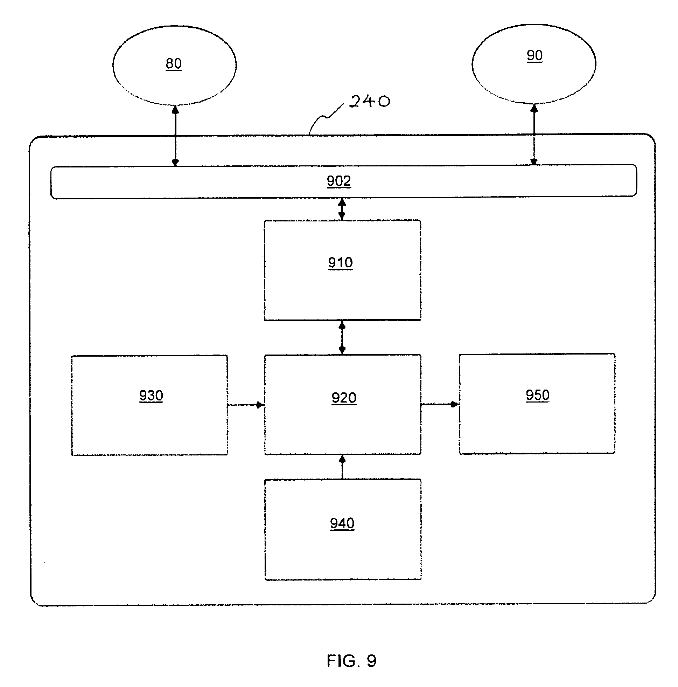

As shown in greater detail in FIG. 9, the apparatus 200 is provided with a synchronization module 240 that comprises a mark data handler 910 configured for reading the indexing value of the first mark 83-1 set in the DCS 80. This is achieved through a mark sync interface 902 in the synchronization module 240. The mark sync interface 902 can be implemented in a variety of ways for different projects, such as, for example, using a general library function interface, Object Linking and Embedding for Process Control (OPC) interface and other common data transfer interfaces.

Upon setting the first mark 83-1 on the function block 84, the permission module 260 checks if the operator 82 has the necessary permission to add or remove a mark 804. The answer being "Yes," a second mark 93-1 which, in the embodiment shown is a maintenance mark 93-1, is automatically displayed on a device 94-1 in the AMS 90, 22, 806. This occurs if it is determined that the first mark 83-1 is an external mark 805, i.e., the first mark 83-1 has been previously defined to be linked to the second mark 93-1. The device 94-1 is one that is involved in the plant function controlled by the function block 84 where the abnormality has been detected. The same second mark 93-1 may also be automatically displayed on one 94-2 or more other devices involved in the same function block 84.

The synchronization module 240 is configured for selecting the second mark 93-1 for automatic display by the display module 220 when the first mark 83-1 is set. This is achieved by providing a decision engine 920 in the synchronization module 240 that receives a mark update from the mark data handler 910 whenever any mark is set in either the DCS 80 or AMS 90. The second mark 93-1 is selected from among the plurality of marks already defined using the mark definition module 230. This is achieved by the decision engine 920 calling up a mark definition processer 930 in the synchronization module 240 to load mark attributes defined using the mark definition module 230. A shared item mapping processor 940 is also provided in the synchronization module 240 to find related work units, i.e. which devices 94 are related to which function blocks 84. Based on attributes of the first mark 83-1 and attributes of the second mark 93-1 as defined with the mark definition module 230, the appropriate second mark 93-1 is eventually selected by the decision engine 920 and accordingly applied to the appropriate device (in this case devices 94-1 and 94-2) of the AMS 90 through the mark data handler 910 via the mark sync interface 902 as shown.

For the second mark 93-1 to be selected by the synchronization module 240 and displayed by the display module 220, the attributes of the first mark 83-1 and the second mark 93-1 have to have been previously defined to include linking them using the mark definition module 230. As can be seen in FIG. 2, the first mark 83-1 and the second mark 93-1 preferably have a same indexing value 231 to indicate their linked relationship. Predefined labels 234 shown on the first mark 83-1 and on the second mark 93-1 serve to provide appropriate information to DCS operators 82 and AMS users 92. For example, as can be seen in FIG. 2, a label 234 on the first mark 83-1 has been defined to show as "DO NOT OPERATE". This informs DCS operators 83 that the function block 84 should not be operated due to the detected abnormality. Labels 234 defined to show as "MNT REQUEST" are displayed on the second marks 93-1 so that AMS users 92 seeing the second marks 93-1 in the AMS 90 understand that maintenance requests have been raised for the devices 94-1 and 94-2.

If, however, the first mark 83-1 was only an internal mark, i.e., it has not been linked to any other mark, then no second mark is displayed and only the first mark is displayed on the function block 84 in the DCS 80, 807. In the preferred embodiment, the first mark 83-1 also continues to be displayed on the function block 84, 807 if the second mark 93-1 is successfully displayed 808. Upon display of the first mark 83-1, the permission module 260 preferably updates the control permission level for the function block 84, 809. The synchronization module 240 then checks if notification is required upon setting the first mark 83-1, 810. If the answer is "Yes," the synchronization module 240 directs the notification module 280 to alert appropriate persons by generating a notification message 811, as previously defined in the notification setting of the mark using the mark definition module 230. The synchronization module 240 also checks if any action on a third party system has been defined for the first mark 83-1, 812, regardless whether notification is required. If "Yes," the third party module 290 is activated to trigger a third party system action 813. Any actions by the permission module 260, the notification module 280 and the third party module 290 are triggered by the synchronization module 240 via an action trigger 950 provided in the synchronization module 240. The action trigger 950 triggers appropriate modules 260, 280, 290 based on determinations of the decision engine 920, according to predefined attributes of the marks that are set or removed.

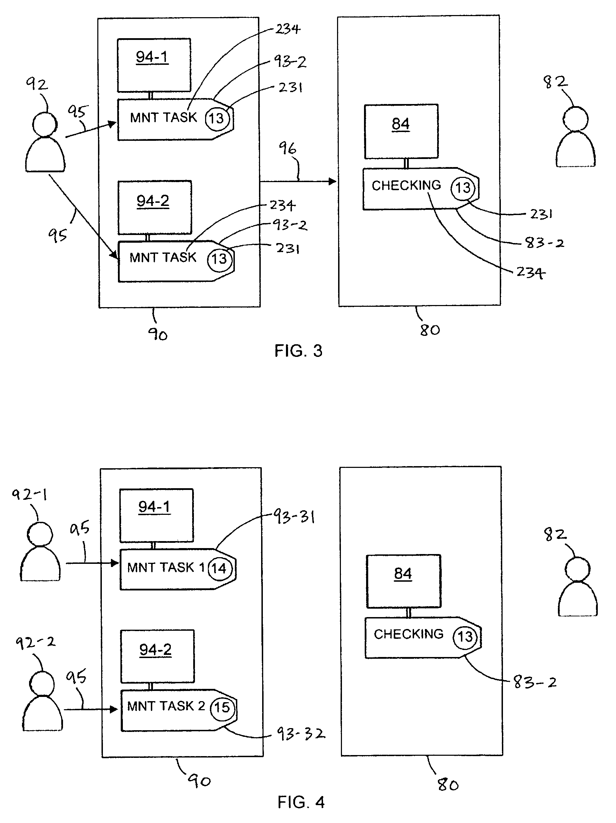

Upon seeing the automatically displayed maintenance marks 93-1 in the AMS 90, an AMS user 92 such as the maintenance manager can acknowledge the maintenance requests by setting new maintenance marks 93-2 in place of maintenance marks 93-1, as shown by arrow 95 in FIG. 3. This results in a new operation mark 83-2 being automatically displayed on the abnormal function block 84 in replacement of the original operation mark 83-1, as shown by arrow 96. The new operation mark 83-2 that is displayed is again selected by the synchronization module 240 from the plurality of marks defined using the mark definition module 230, based on predefined attributes of the new operation mark 83-2 and the new maintenance marks 93-2 which would have included linking them.

The operation mark 83-2 may be predefined to have a label that shows as "CHECKING" so that a DCS operator 82 realizes that maintenance personnel are now working on the maintenance request triggered by the first operation mark 83-1. The maintenance marks 93-2 may be predefined to have a label that shows as "MNT TASK" so that AMS users 92 realize that a maintenance task is to be performed on the devices 94-1 and 94-2. Preferably, the operation mark 83-2 and the maintenance marks 93-2 also have the same indexing value 231 as shown because of their linked relationship.

As shown in FIG. 4, maintenance teams 92-1 and 92-2, upon seeing the maintenance marks 93-2 on the devices 94-1 and 94-2 under their respective care, may set new maintenance marks 93-31, 93-32 to replace the maintenance marks 93-2 in order to indicate that they are now working on their respective devices 94-1 and 94-2. The new maintenance marks 93-31, 93-32 are defined without linkage to any operation mark 83 since they are internal notification marks within the AMS 90. Consequently, no new operation mark is selected by the synchronization module 240 for automatic display on the function block 84 since the synchronization module 240 is able to determine from the attributes of the maintenance marks 93-31, 93-32 that they 93-31, 93-32 are not linked to any operation mark 83. The operation mark 83-2 thus continues to show on the function block 83 as "CHECKING". Accordingly, the maintenance marks 93-31, 93-32 preferably have indexing values that are different from the indexing value of the operation mark 83-2.

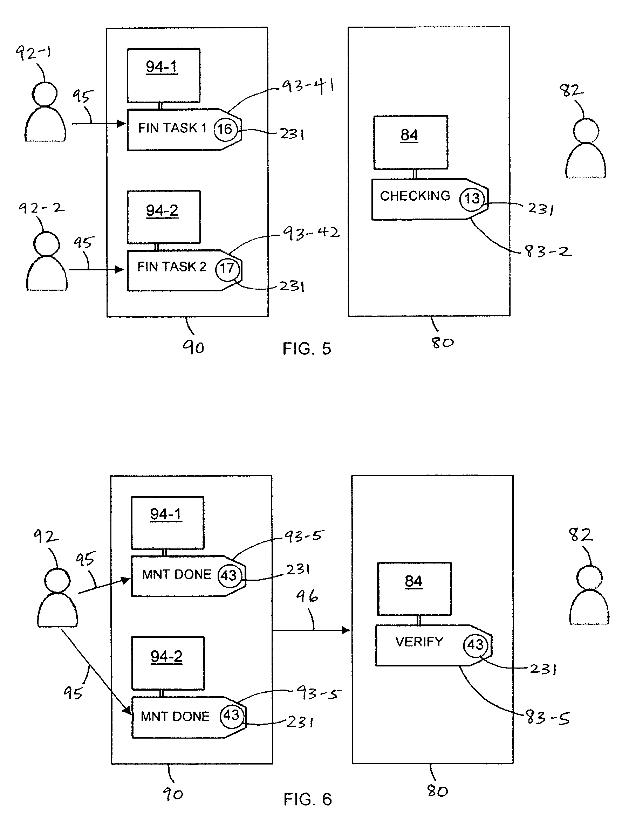

When the maintenance teams 92-1 and 92-2 have finished their maintenance work, as shown in FIG. 5, they can set new maintenance marks 93-41, 93-42 labeled as "FIN TASK" on their respective devices 94-1 and 94-2, as shown by arrows 95. As the maintenance marks 93-41, 93-42 are also not linked to any operation mark 83, the synchronization module 240 does not select any operation mark 83 for display on the function block 84. The operation mark 83-2 labeled as "CHECKING" continues to be shown on the function block 84.

Upon seeing the maintenance marks 93-41, 9342 labeled as "FIN TASK", the maintenance manager 92 can set maintenance marks 93-5 labeled as "MNT DONE" on the devices 94-1 and 94-2, as shown by arrows 95 in FIG. 6. The maintenance mark 93-5 has been predefined to be linked to an operation mark 83-5 with a label that shows "VERIFY".

Accordingly, the synchronization module 240 selects the operation mark 83-5 to be automatically displayed on the function block 84, replacing the operation mark 83-2 labeled as "CHEEKING", as shown by arrow 96. Because of their linkage, the maintenance mark 93-5 and the operation mark 83-5 preferably have a same indexing value 231 as shown. In this way, the DCS operator 82 realizes that the maintenance personnel have completed the maintenance request triggered by the original operation mark 83-1 and the function block 84 should be verified for any lingering abnormality.

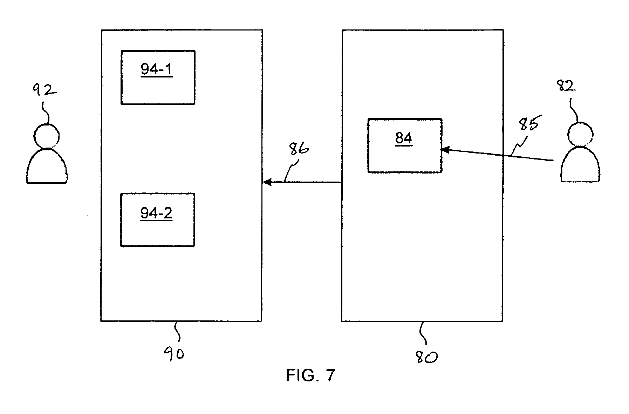

When the DCS operator 82 is satisfied that the normal operation has resumed for the function block 84, as shown by arrow 85 in FIG. 7, the DCS operator 82 removes the operation mark 83-5, resulting in automatic removal of the maintenance mark 93-5 in the AMS 90 by the synchronization module 240, as shown by arrow 86. When the AMS users 90 see that no maintenance marks remain, they know that normal operation has resumed.

The apparatus 200 and method 20 described above thus allow DCS operators 82 and AMS users 92 to be provided with appropriate information of the function blocks 84 and devices 94 involved in running the plant in a timely and accurate manner, without having to rely on conventional communication channels such as face-to-face meetings, sms-texts, walkie-talkie, email and instant messaging systems that are time-consuming and may be inadvertently missed or misinterpreted. In this way, more efficient and safer operation of the plant is achieved.

Whilst there has been described in the foregoing description exemplary embodiments of the present invention, it will be understood by those skilled in the technology concerned that many variations in details of design, construction and/or operation may be made without departing from the present invention. For example, although in the embodiment described above the first mark was set by a DCS operator 82 in the DCS 80 resulting in automatic display of the second mark in the AMS 90, in other embodiments or examples of use, the first mark could be set by an AMS user 92 in the AMS 90 resulting in automatic display of the second mark in the DCS 80.

## Claims

1. A method of providing industrial plant information of an industrial plant, the method comprising:
linking a first mark with a second mark, the first mark and the second mark having a same indexing value to indicate their linked relationship;
setting the first mark by one of: a distributed control system operator (82) and an asset management system user (92) and displaying the first mark by a display module (220) in one of: a distributed control system (DCS) (80) and an asset management system (AMS) (90), respectively, of the industrial plant; and
upon setting the first mark, automatically displaying the second mark in the other of: the distributed control system and the asset management system;
wherein the second mark is selected from among a plurality of marks and selection of the second mark is based on attributes of the first mark and attributes of the second mark; and
wherein attributes of the first mark and attributes of the second mark each include a synchronization setting and have been predefined such that the first mark provides appropriate information to one of: the distributed control system operator (82) and the asset management system user (92), and the second mark provides appropriate information to the other of: the distributed control system operator (82) and the asset management system user (92).

2. The method of claim 1, wherein the appropriate information is provided by displaying the appropriate information on the first mark and on the second mark.

3. The method of claim 1, wherein setting the first mark comprises setting an operation mark (83) on a function block (84) in the distributed control system upon detecting an abnormality in the function block.

4. The method of claim 3, wherein automatically displaying the second mark comprises automatically displaying a maintenance mark (93) on a device in the asset management system, the device being involved in a function controlled by the function block.

5. The method of claim 4, further comprising setting a new maintenance mark after action has been taken on the device.

6. The method of claim 5, further comprising automatically displaying a new operation mark upon setting the new maintenance mark.

7. The method of claim 6, further comprising removing the new operation mark upon detecting resumption of normal operation of the function block.

8. The method of claim 7, further comprising automatically removing the maintenance mark upon removing the new operation mark.

9. An apparatus (200) for providing industrial plant information of an industrial plant, the apparatus comprising:
a display module (220) configured for displaying marks in a distributed control system (DCS) (80) and an asset management system (AMS) (90), respectively, of the industrial plant, wherein the marks are set and removed by one of: a distributed control system operator (82) and an asset management system user (92);
a mark definition module (230) configured for defining attributes of a plurality of marks including a first mark and a second mark and for linking the first mark with the second mark, the first mark and the second mark having a same indexing value to indicate their linked relationship; and
a synchronization module (240) configured for selecting the second mark from among the plurality of marks for automatic display by the display module in one of: the DCS and the AMS when the first mark is set by one of: the distributed control system operator (82) and the asset management system user (92) and displayed by the display module (220) in the other one of: the DCS and the AMS, respectively, wherein the selection of the second mark is based on attributes of the first mark and attributes of the second mark, each including a synchronization setting and being defined with the mark definition module, such that the first mark provides appropriate information to one of: the distributed control system operator (82) and the asset management system user (92), and the second mark provides appropriate information to the other of: the distributed control system operator (82) and the asset management system user (92).

10. The apparatus of claim 9, wherein the appropriate information is provided by showing the appropriate information on the first mark and on the second mark, and/or wherein the synchronization module is further configured for removing the second mark upon removing the first mark.

11. The apparatus of claim 9, wherein the first mark is an operation mark (83) on a function block (84) in the distributed control system.

12. The apparatus of claim 11, wherein the second mark is a maintenance mark (93) on a device in the asset management system, the device being involved in a function controlled by the function block.

13. The apparatus of claim 9, further comprising a permission module (260) configured for allowing only selected distributed control system operators and asset management system users to set or remove the first mark and the second mark, and/or further comprising a notification module (280) configured for alerting a person to an occurrence of at least one of: displaying the second mark and updating the first mark upon setting the second mark, and/or further comprising a third party module (290) for activating third party tasks upon setting the first mark.

14. The apparatus of claim 9, wherein the synchronization module comprises a mark sync interface (902) configured for channeling marks to and from the distributed control system and the asset management system; a mark data handler (910) configured for receiving the first mark via the mark sync interface and for sending the second mark through the mark sync interface to be displayed by the display module; a mark definition processor (930) configured for loading the attributes of the first mark and the second mark; and a decision engine (920) configured for selecting the second mark based on the attributes of the first mark loaded from the mark definition processor and for applying the second mark through the mark data handler.

## Patentansprüche

1. Verfahren zum Bereitstellen von Industrieanlageninformationen einer Industrieanlage, wobei das Verfahren aufweist:
Verbinden einer ersten Markierung mit einer zweiten Markierung, wobei die erste Markierung und die zweite Markierung denselben Indexwert aufweisen, um ihre Verbindungsbeziehung anzuzeigen;
Einstellen der ersten Markierung durch einen von einem Betreiber eines dezentralen Steuerungssystems (82) und einem Nutzer eines Anlagenverwaltungssystems (92), und Anzeigen der ersten Markierung durch ein Anzeigemodul (220) in jeweils einem von einem dezentralen Steuerungssystem (DCS) (80) und einem Anlagenverwaltungssystem (AMS) (90) der Industrieanlage; und
auf das Einstellen der ersten Markierung hin, automatisches Anzeigen der zweiten Markierung in dem anderen von dem dezentralen Steuerungssystem und dem Anlagenverwaltungssystem;
wobei die zweite Markierung unter einer Vielzahl von Markierungen ausgewählt wird, und die Auswahl der zweiten Markierung auf Attributen der ersten Markierung und Attributen der zweiten Markierung basiert; und
wobei sowohl Attribute der ersten Markierung als auch Attribute der zweiten Markierung eine Synchronisationseinstellung umfassen und derart vordefiniert worden sind, dass die erste Markierung geeignete Informationen einem von dem Betreiber des dezentralen Steuerungssystems (82) und dem Nutzer des Anlagenverwaltungssystems (92) bereitstellt, und die zweite Markierung geeignete Informationen dem anderen von dem Betreiber des dezentralen Steuerungssystems (82) und dem Nutzer des Anlagenverwaltungssystems (92) bereitstellt.

2. Verfahren nach Anspruch 1, wobei die geeigneten Informationen durch Anzeigen der geeigneten Informationen auf der ersten Markierung und auf der zweiten Markierung bereitgestellt werden.

3. Verfahren nach Anspruch 1, wobei das Einstellen der ersten Markierung ein Einstellen einer Betriebsmarkierung (83) auf einem Funktionsblock (84) in dem dezentralen Steuerungssystem auf ein Erfassen einer Anomalie in dem Funktionsblock hin aufweist.

4. Verfahren nach Anspruch 3, wobei das automatische Anzeigen der zweiten Markierung ein automatisches Anzeigen einer Instandhaltungsmarkierung (93) bezüglich einer Vorrichtung in dem Anlagenverwaltungssystem aufweist, wobei die Vorrichtung in einer durch den Funktionsblock gesteuerten Funktion involviert ist.

5. Verfahren nach Anspruch 4, ferner mit einem Einstellen einer neuen Instandhaltungsmarkierung, nachdem bezüglich der Vorrichtung eine Aktion durchgeführt worden ist.

6. Verfahren nach Anspruch 5, ferner mit einem automatischen Anzeigen einer neuen Betriebsmarkierung auf das Einstellen der neuen Instandhaltungsmarkierung hin.

7. Verfahren nach Anspruch 6, ferner mit einem Entfernen der neuen Betriebsmarkierung auf ein Erfassen einer Wiederaufnahme eines normalen Betriebs des Funktionsblocks hin.

8. Verfahren nach Anspruch 7, ferner mit einem automatischen Entfernen der Instandhaltungsmarkierung auf ein Entfernen der neuen Betriebsmarkierung hin.

9. Vorrichtung (200) zum Bereitstellen von Industrieanlageninformationen einer Industrieanlage, wobei die Vorrichtung aufweist:
ein Anzeigemodul (220), das konfiguriert ist, um Markierungen jeweils in einem dezentralen Steuerungssystem (DCS) (80) und einem Anlagenverwaltungssystem (AMS) (90) der Industrieanlage anzuzeigen, wobei die Markierungen durch einen von einem Betreiber eines dezentralen Steuerungssystems (82) und einem Nutzer eines Anlagenverwaltungssystems (92) eingestellt und entfernt werden;
ein Markierungsdefinitionsmodul (230), das konfiguriert ist, um Attribute einer Vielzahl von Markierungen einschließlich einer ersten Markierung und einer zweiten Markierung zu definieren und die erste Markierung mit der zweiten Markierung zu verbinden, wobei die erste Markierung und die zweite Markierung denselben Indexwert aufweisen, um ihre Verbindungsbeziehung anzuzeigen; und
ein Synchronisationsmodul (240), das konfiguriert ist, um die zweite Markierung unter der Vielzahl von Markierungen zum automatischen Anzeigen durch das Anzeigemodul in einem von dem DCS und dem AMS auszuwählen, wenn die erste Markierung durch einen von dem Betreiber des dezentralen Steuerungssystems (82) und dem Nutzer des Anlagenverwaltungssystems (92) eingestellt ist, und durch das Anzeigemodul (220) jeweils in dem anderen von dem DCS und dem AMS angezeigt wird, wobei die Auswahl der zweiten Markierung auf Attributen der ersten Markierung und Attributen der zweiten Markierung basiert, wobei jede eine Synchronisationseinstellung umfasst und mit dem Markierungsdefinitionsmodul derart definiert ist, dass die erste Markierung geeignete Informationen an einen von dem Betreiber des dezentralen Steuerungssystems (82) und dem Nutzer des Anlagenverwaltungssystems (92) bereitstellt, und die zweite Markierung geeignete Informationen an den anderen von dem Betreiber des dezentralen Steuerungssystems (82) und dem Nutzer des Anlagenverwaltungssystems (92) bereitstellt.

10. Vorrichtung nach Anspruch 9, wobei die geeigneten Informationen durch Zeigen der geeigneten Informationen auf der ersten Markierung und auf der zweiten Markierung bereitgestellt werden, und/oder wobei das Synchronisationsmodul ferner konfiguriert ist, um die zweite Markierung auf ein Entfernen der ersten Markierung hin zu entfernen.

11. Vorrichtung nach Anspruch 9, wobei die erste Markierung eine Betriebsmarkierung (83) auf einem Funktionsblock (84) in dem dezentralen Steuerungssystem ist.

12. Vorrichtung nach Anspruch 11, wobei die zweite Markierung eine Instandhaltungsmarkierung (93) bezüglich einer Vorrichtung in dem Anlagenverwaltungssystem ist, wobei die Vorrichtung in einer durch den Funktionsblock gesteuerten Funktion involviert ist.

13. Vorrichtung nach Anspruch 9, ferner mit einem Zulassungsmodul (260), das zum Zulassen lediglich ausgewählter Betreiber des dezentralen Steuerungssystems und Nutzer des Anlagenverwaltungssystems konfiguriert ist, um die erste Markierung und die zweite Markierung einzustellen oder zu entfernen, und/oder ferner mit einem Benachrichtigungsmodul (280), das konfiguriert ist, um eine Person zu einem Auftreten von zumindest einem von einem Anzeigen der zweiten Markierung und einem Aktualisieren der ersten Markierung auf ein Einstellen der zweiten Markierung hin zu alarmieren, und/oder ferner mit einem Drittmodul (290) zum Aktivieren von Drittaufgaben auf ein Einstellen der ersten Markierung hin.

14. Vorrichtung nach Anspruch 9, wobei das Synchronisationsmodul eine Markierungssynchronisationsschnittstelle (902), die konfiguriert ist, um Markierungen zu und von dem dezentralen Steuerungssystem und dem Anlagenverwaltungssystem zu kanalisieren; einen Markierungsdatenhandler (910), der konfiguriert ist, um die erste Markierung über die Markierungssynchronisationsschnittstelle zu empfangen und die zweite Markierung über die Markierungssynchronisationsschnittstelle zu senden, um durch das Anzeigemodul angezeigt zu werden; einen Markierungsdefinitionsprozessor (930), der konfiguriert ist, um die Attribute der ersten Markierung und der zweiten Markierung zu laden; und eine Entscheidungsmaschine (920) aufweist, die konfiguriert ist, um die zweite Markierung basierend auf den Attributen der ersten Markierung, die von dem Markierungsdefinitionsprozessor geladen sind, auszuwählen, und die zweite Markierung durch den Markierungsdatenhandler anzuwenden.

## Revendications

1. Procédé de fourniture d'informations sur un site industriel d'un site industriel, le procédé comprenant :
la liaison d'une première marque avec une deuxième marque, la première marque et la deuxième marque ayant une même valeur d'indexation pour indiquer leur relation liée ;
l'établissement de la première marque par un élément parmi : un opérateur de système de contrôle distribué (82) et un utilisateur du système de gestion d'actifs (92) et l'affichage de la première marque par un module d'affichage (220) dans un élément parmi : un système de contrôle distribué (DCS) (80) et un système de gestion d'actifs (AMS) (90), respectivement, de l'installation industrielle ; et
lors de l'établissement de la première marque, l'affichage automatique de la deuxième marque dans l'autre élément parmi : le système de contrôle distribué et le système de gestion d'actifs ;
dans lequel la deuxième marque est sélectionnée parmi une pluralité de marques et la sélection de la deuxième marque est basée sur des attributs de la première marque et des attributs de la deuxième marque ; et
dans lequel des attributs de la première marque et des attributs de la deuxième marque comprennent chacun un réglage de synchronisation et ont été prédéfinis de sorte que la première marque fournisse des informations appropriées à l'un des éléments parmi : l'opérateur de système de contrôle distribué (82) et l'utilisateur du système de gestion d'actifs (92) et la deuxième marque fournisse des informations appropriées à l'autre élément parmi : l'opérateur de système de contrôle distribué (82) et l'utilisateur du système de gestion d'actifs (92).

2. Procédé selon la revendication 1, dans lequel les informations appropriées sont fournies en affichant les informations appropriées sur la première marque et sur la deuxième marque.

3. Procédé selon la revendication 1, dans lequel l'établissement de la première marque comprend l'établissement d'une marque de fonctionnement (83) sur un bloc de fonction (84) dans le système de contrôle distribué lors de la détection d'une anomalie dans le bloc de fonction.

4. Procédé selon la revendication 3, dans lequel l'affichage automatique de la deuxième marque comprend l'affichage automatique d'une marque de maintenance (93) sur un dispositif dans le système de gestion d'actifs, le dispositif étant impliqué dans une fonction contrôlée par le bloc de fonction.

5. Procédé selon la revendication 4, comprenant en outre l'établissement d'une nouvelle marque de maintenance après qu'une action a été entreprise sur le dispositif.

6. Procédé selon la revendication 5, comprenant en outre l'affichage automatique d'une nouvelle marque de fonctionnement lors de l'établissement de la nouvelle marque de maintenance.

7. Procédé selon la revendication 6, comprenant en outre la suppression de la nouvelle marque de fonctionnement lors de la détection de la reprise du fonctionnement normal du bloc de fonction.

8. Procédé selon la revendication 7, comprenant en outre la suppression automatique de la marque de maintenance lors de la suppression de la nouvelle marque de fonctionnement.

9. Appareil (200) pour fournir des informations sur un site industriel d'un site industriel, l'appareil comprenant :
un module d'affichage (220) configuré pour afficher des marques dans un système de contrôle distribué (DCS) (80) et un système de gestion d'actifs (AMS) (90) respectivement, du site industriel, dans lequel les marques sont établies et supprimées par un élément parmi : un opérateur de système de contrôle distribué (82) et un utilisateur du système de gestion d'actifs (92) ;
un module de définition de marque (230) configuré pour définir des attributs d'une pluralité de marques comprenant une première marque et une deuxième marque et pour lier la première marque à la deuxième marque, la première marque et la deuxième marque ayant une même valeur d'indexation pour indiquer leur relation liée ; et
un module de synchronisation (240) configuré pour sélectionner la deuxième marque parmi la pluralité de marques pour l'affichage automatique par le module d'affichage dans l'un des éléments parmi : le DCS et l'AMS quand la première marque est réglée par un élément parmi : l'opérateur de système de contrôle distribué (82) et l'utilisateur du système de gestion d'actifs (92) et affiché par le module d'affichage (220) dans l'autre élément parmi : le DCS et l'AMS, respectivement, dans lequel la sélection de la deuxième marque est basée sur des attributs de la première marque et des attributs de la deuxième marque, comprenant chacune un réglage de synchronisation et étant définie avec le module de définition de marque, de sorte que la première marque fournisse des informations appropriées à un élément parmi : l'opérateur de système de contrôle distribué (82) et l'utilisateur de système de gestion d'actifs (92), et la deuxième marque fournisse des informations appropriées à l'autre élément parmi : l'opérateur de système de contrôle distribué (82) et l'utilisateur de système de gestion d'actifs (92).

10. Appareil selon la revendication 9, dans lequel les informations appropriées sont fournies en montrant les informations appropriées sur la première marque et sur la deuxième marque, et/ou dans lequel le module de synchronisation est en outre configuré pour supprimer la deuxième marque lors de la suppression de la première marque.

11. Appareil selon la revendication 9, dans lequel la première marque est une marque de fonctionnement (83) sur un bloc de fonction (84) dans le système de contrôle distribué.

12. Appareil selon la revendication 11, dans lequel la deuxième marque est une marque de maintenance (93) sur un dispositif dans le système de gestion d'actifs, le dispositif étant impliqué dans une fonction contrôlée par le bloc de fonction.

13. Appareil selon la revendication 9, comprenant en outre un module d'autorisation (260) configuré pour permettre uniquement aux opérateurs du système de contrôle distribué et aux utilisateurs du système de gestion d'actifs sélectionnés d'établir ou de supprimer la première marque et la deuxième marque et/ou comprenant en outre un module de notification (280) configuré pour alerter une personne de la survenue d'au moins un élément parmi : l'affichage de la deuxième marque et la mise à jour de la première marque lors de l'établissement de la deuxièmpe marque, et/ou comprenant en outre un module de tiers (290) pour activer des tâches de tiers lors de l'établissement de la première marque.

14. Appareil selon la revendication 9, dans lequel le module de synchronisation comprend une interface de synchronisation de marque (902) configurée pour canaliser des marques vers et depuis le système de contrôle distribué et le système de gestion d'actifs ; un gestionnaire de données de marque (910) configuré pour recevoir la première marque via l'interface de synchronisation de marque et pour envoyer la deuxième marque à travers l'interface de synchronisation de marque à afficher par le module d'affichage ; un processeur de définition de marque (930) configuré pour charger les attributs de la première marque et de la deuxième marque ; et un moteur de décision (920) configuré pour sélectionner la deuxième marque, sur la base des attributs de la première marque chargée depuis le processeur de définition de marque et pour appliquer la deuxième marque à travers le gestionnaire de données de marque.
